# EUROPEAN PATENT APPLICATION

(11) **EP 3 973 830 A1**
(43) Date of publication of application: **30.03.2022**
(21) Application number: 20204618.1
(22) Date of filing: 29.10.2020
(51) Int. Cl.: A47J 43/042, A47J 43/046, A47J 43/07

(54) **CONNECTOR ASSEMBLY FOR A KITCHEN MACHINE AND KITCHEN MACHINE WITH CONNECTOR ASSEMBLY**

(30) Priority: 29.09.2020 EP 20198974
(71) Applicant: BSH Hausgeräte GmbH, 81739 München (DE)
(72) Inventor: Brecko, Ales, 3000 Celje (SI); Decman, Igor, 3232 Ponikva (SI); Golavsek, Samo, 3312 Prebold (SI)

(57) **Abstract**

Disclosed is a connector assembly 10 for connecting a jug unit 20 with a motor base 30 of a kitchen machine 1. The connector assembly 10 comprises a housing 11, a movable tool holder 12, sealing means 13 and at least one elastic element 14. The tool holder 12 is configured to be moved, by the jug unit 20 when the jug unit is being fixed to the connector assembly 10 - and against an elastic force of the one or more elastic element/s 14 - from a first tool holder position to a second tool holder position, and to meanwhile press the sealing means 13 against the jug unit 20.

Further disclosed is a kitchen machine 1 comprising a connector assembly 10, a motor base 30 and a jug unit 20.

## Description

The present invention concerns a connector assembly for connecting a jug unit of a kitchen machine with a motor base of the kitchen machine. The invention further concerns a kitchen machine with a jug unit, a motor base and a connector assembly.

Kitchen machines typically comprise a jug unit configured to receive food which is to be processed, and a motor base configured to drive a respective tool for processing the food. To facilitate cleaning and/or exchanging the tool, the jug unit and the motor base may be separable from each other. To this end, the kitchen machine may further comprise a connector assembly to be arranged between the jug unit and the motor base. Such connector assembly thus connects the jug unit with the motor base. It may include a base surface of the jug unit, and it may comprise a tool holder configured to mount the tool.

It is an object of the present invention to provide an improved connector assembly and an improved kitchen machine.

The object is achieved with a connector assembly according to claim 1 and with a kitchen machine according to claim 7. Preferred embodiments are disclosed in the dependent claims, in the description and in the figures.

A connector assembly according to the present invention serves for connecting a jug unit of a kitchen machine with a motor base thereof. The connector assembly comprises a housing with connection means for fixing the jug unit to the connector assembly. The housing may comprise bayonet mount means and/or at least one screw thread. According to preferred embodiments, such screw thread may be a one-start thread or a multiple-start thread, in particular a double-start thread.

Moreover, the connector assembly comprises a tool holder holding or configured to hold at least one (preferably detachable) tool for processing food, and to provide a closure surface for closing an opening of the jug unit when combined therewith. In particular, while the jug unit alone may form a jug wall only (without a ground), the closure surface may complete the jug unit so as to form, in combination, a jug configured to receive and hold food.

For instance, the tool holder may hold or may be configured to hold a rotatable tool, such as a rotatable knife assembly. The tool may be comprised by the connector assembly. In particular, the kitchen machine may comprise an electric blender. The tool holder is movable relative to the housing.

The connector assembly further comprises sealing means configured to seal a connection of the tool holder with the jug unit when the jug unit is fixed to the connector assembly, and one or more elastic element(s). Such elastic element(s) may comprise at least one spring (e.g., a flatSil spring, a torsion spring, a compression spring and/or a compression-torsion spring), and/or an elastomere element, for example.

The tool holder is configured to be moved (relative to the housing) by the jug unit when the jug unit is being fixed to the connector assembly. In particular, the tool holder may thus be configured to at least partially adopt a fixing movement of the jug unit, e.g., it may take over at least one direction component of the fixing movement. For instance, if the fixing comprises a screwing about a screwing axis, the tool holder may be configured to be moved, by the jug unit, at least parallel to the screwing axis.

Therein, the movement occurs against an elastic force of the one or more elastic element/s, and the tool holder is transferred from a first tool holder position to a second tool holder position. During the transfer, due to the elastic force of the one or more elastic element/s, the tool holder presses the sealing means against the jug unit, preferably to an edge thereof.

A kitchen machine according to the present invention comprises a jug unit, a motor base and a connector assembly according an embodiment of the present invention, the connector assembly being configured to connect the jug unit with the motor base. The motor base may preferably comprise an electric motor. In particular, the kitchen machine may comprise an electric blender. Advantageously, in a designated state and orientation of utilisation of the kitchen machine, the motor base, the connector assembly and the jug unit may be stacked.

The present invention thus prevents a leakage resulting from an incomplete fixing of the jug unit to the connector assembly. In particular, spilling of food and - in case of hot food being processed - a user burning himself can be avoided. Moreover, the present invention facilitates a pressure balance when the jug unit is being detached from the connector assembly after use, in particular after processing hot food, which may cause an increased pressure in the interior of the jug unit fixed to (and closed by) the connector assembly. Indeed, if the jug unit having such increased pressure in its interior is begun to be detached from the connector assembly, as long as the increased pressure exceeds the elastic force of the at least one elastic element, the increased pressure may cause the tool holder to be pressed away from the jug unit. As a consequence, the sealing may be temporarily loosed, such that air (and possibly content) can escape and the pressure inside the jug unit is released until the elastic force of the at least one elastic element exceeds the pressure within the jug unit, which exceeding then causes a rearrangement of the sealing. By the pressure release, the further detaching is made easier, and an eruptive escape of steam or other content is prevented. In particular, safety of a user is increased.

The pressure balance is of particular importance in embodiments in which the jug unit is devoid of an opening (such as a pour hole) further to the opening to be closed by the connector assembly.

According to a preferred embodiment of the present invention, the connector assembly further comprises a clutch unit which is connected (e.g., attached) to the tool holder. Therein, if the tool holder is in its first tool holder position, the clutch unit is unable to engage with a clutch element of the motor base, and if the tool holder is in its second tool holder position, the clutch unit is able to engage with the clutch element so as to drive the tool (if the connector assembly is coupled on the motor base).

As a consequence, a tool possibly held by the tool holder cannot be driven as long as the tool holder is in its first tool holder position to which position the tool holder is urged by the elastic force of the at least one elastic element. Thus, as long as the jug unit is not fixed to the connector assembly, and unless said elastic force is otherwise overcome (e.g. by pressing the tool holder), the tool cannot by inadvertently operated. Therefore, safety of a kitchen machine comprising such connector assembly is increased.

Advantageously, for transferring the tool holder from its first tool holder position to its second tool holder position (against the elastic force of the at least one elastic element) it is necessary to apply a force of at least 15N, at least 17N or at least 19N. Additionally or alternatively, the force necessary for transferring the tool holder from its first tool holder position to its second tool holder position may be at most 23N or at most 21N. As mentioned above, the force may be applied by fixing the jug unit to the connector assembly.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
- Fig. 1a:: a kitchen machine according to an exemplary embodiment of the present invention;
- Fig. 1b:: the connector assembly and the jug unit of the kitchen machine of Figure 1a;
- Fig. 1c:: the kitchen machine of Figure 1a in a different state;
- Fig. 2a:: a cross section of a connector assembly according to the present invention and a jug unit detached therefrom;
- Fig. 2b:: a cross section of the connector assembly and the jug unit of Figure 2a during fixing; and
- Fig. 2c:: a cross section of the connector assembly of Figures 2a and 2b coupled, with-out a jug unit fixed thereto, to a motor base.

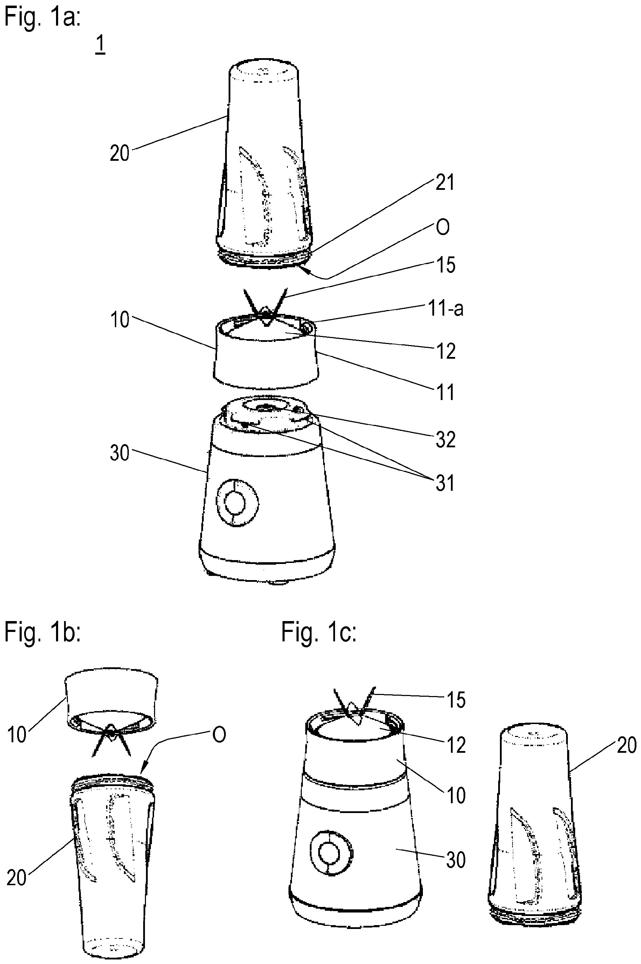

In Figure 1a, a kitchen machine 1 according to an exemplary embodiment of the present invention is shown in an exploded perspective view. The kitchen machine 1 comprises a connector assembly 10, a jug unit 20 and a motor base 30. In Figure 1a, these components are shown separate from each other; for processing a respective food within the jug unit (not shown), they are designated to be stacked in an orientation as indicated in Figure 1a.

Therein, the jug unit 20 of the shown embodiment is seen to be a bottle which in the situation depicted in Figure 1a is turned upside down, i.e. with its bottom surface directed upwards and its opening O (devised to be closed by a closure surface provided by a tool holder 12 of the connector assembly 10) directed downwardly. In use of such embodiment, prior to processing food, the bottle 20 is to be filled with the food while in a reversed orientation (with the jug opening O upturned) as shown in Figure 1b, then fixed to the connector assembly 10 and thereafter turned around, along with the connector assembly 10, which then is to be coupled on the motor base 30.

As is to be understood, in alternative (not shown) embodiments of the present invention, further to an opening to be closed by the connector assembly, the jug unit may have at least one pour hole. Such pour hole may thus be configured to serve after the jug unit is connected to the connector assemble, such that food can be filled in or poured out of the jug unit, selectively, with the connector assembly fixed to the jug unit. Preferably, in such embodiments, the jug unit further comprises a detachable and/or tiltable lid for the at least one pour hole.

The connector assembly 10 of the kitchen machine 1 shown in Figure 1a comprises a housing 11 including connection means 11-a for engaging with jug unit connection means 21 and thus for detachably fixing the connector assembly 10 to the jug unit 20. In the exemplary embodiment depicted, the connection means 11-a comprises a screw thread.

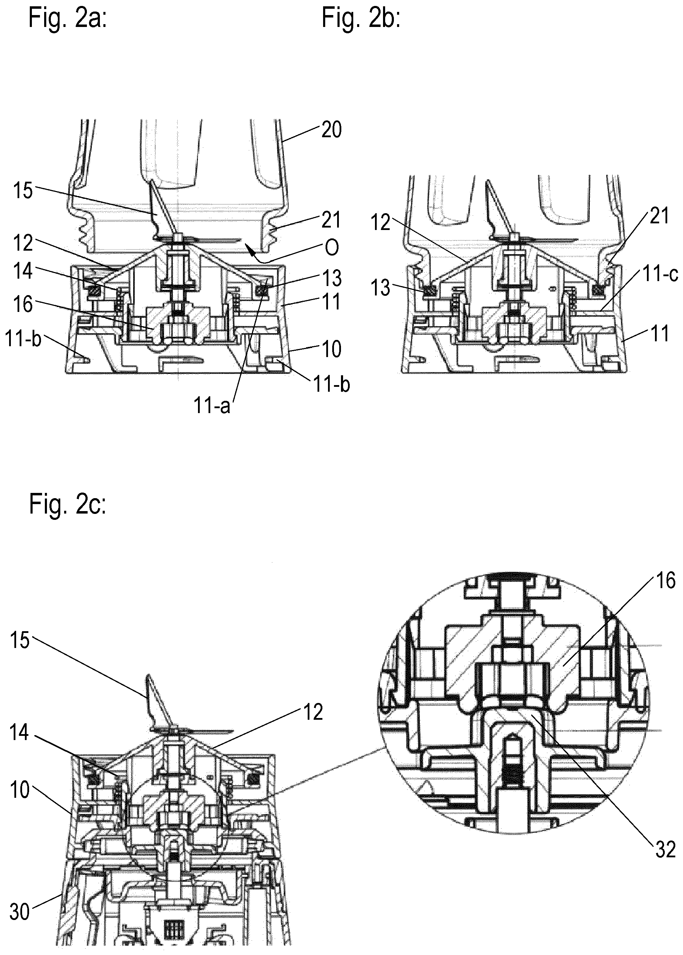

The housing 11 of the connector assembly 10 further comprises further connection means configured to engage with respective motor base connection means 31 of the motor base 30 and to thus detachably couple the connector assembly 10 with the motor base 30. Due to the perspective of Figures 1a - 1c, the further connection means are not visible therein. In the exemplary embodiment depicted, the motor base connection means 31 are embodied as bayonet mount counter components. In the cross sections shown in Figures 2a, 2b, the further connection means 11-b are accordingly seen to comprise bayonet mount components.

The connector assembly 10 depicted in Figure 1a further comprises a tool 15 which in the present case is a rotatable knife assembly. In particular, in this example, the kitchen machine 1 is an electric blender.

For driving the tool 15, a clutch unit (not visible in Figure 1a) of the connector assembly 10 is to be coupled with a clutch element 32 of the motor base 30 to which the connector assembly 10 is to be coupled. In Figures 2a - c, such clutch unit 16 of the connector assembly 10 is visible.

According to a preferred embodiment of the present invention, for realising the coupling, the tool holder 12 has to be urged against the elastic force of at least one elastic element comprised by the connector assembly 10, wherein the urging can be performed by the jug unit 20 when it is fixed (sufficiently) to the connector assembly. As a consequence, if the connector assembly 10 is coupled to the motor base 30 without the jug unit 20 fixed thereto, as depicted in Figure 1c (and likewise, in Figure 2c), the coupling is prohibited unless the respective force is otherwise applied. That is, in the situation shown in Figure 1c, even though the connector assembly 10 is coupled to the motor base 30, the tool 15 cannot be driven by the motor base 30 if the respective force is not applied to the tool holder 12. In this way, injuries caused by an inadvertent operation of the tool are prevented. Preferably, said necessary force is at least 15N, at least 17N or at least 19N. Additionally or alternatively, said force may be at most 23N or at most 21N.

In Figure 2a, a connector assembly 10 according to an embodiment of the present invention and a portion of a jug unit 20 are shown in a cross section along a designated axis of rotation of the tool 15. In the situation depicted, the connector assembly 10 and the jug unit 20 are detached from each other. Due to the elastic force of an elastic element 14 (which in the present case is a compression-torsion spring), the tool holder 12 is held in a first tool holder position.

Figure 2b depicts the connector assembly 10 and a portion of the jug unit 20 in a situation occurring while the jug unit 20 is being fixed to the connector assembly 10. If the jug unit 20 is devoid of a pour hole further to the opening O (as depicted in Figures 1a - 1c), the fixing may preferably be done with the connector assembly and the jug unit 20 being turned about 180° (compared to the orientation depicted), and with food filled in the jug unit (not shown).

In the situation seen in Figure 2b, the jug unit connection means 21 has been partially screwed into the connector means 11-a comprised by the housing 11 of the connector assembly 10, such that an edge of the jug unit 20 touches sealing means 13 (e.g., a seal ring) held by the tool holder 12. When the screw thread comprised by the jug unit connection means 21 is further screwed into the screw thread of the connection means 11-a, the tool holder 12 is moved, by the jug unit 20 and against the force of the elastic element 14, to a second tool holder position (not shown), in which the tool holder 12 strikes against a limit stop 11-c of the housing 11 of the connector assembly 10 (or in which position the connection means 11-a and 21 block a further screwing). Therein, during the transfer from the first to the second tool holder position, the tool holder 10 presses the sealing means 13 against said edge of the jug unit 20.

As a consequence, the sealing function is ensured even before the tool holder 12 has reached its second tool holder position, i.e., even before the jug unit 20 is tightly fixed to the connector assembly 10. Thereby, a leakage resulting from an inadvertent incomplete fixing of the jug unit 20 to the connector assembly 10 can be avoided.

Moreover, the present invention facilitates a pressure balance when the jug unit 20 is being detached from the connector assembly 10 after use, in particular after processing hot food, which may cause an increased pressure in the interior of the jug unit 20 fixed to (and closed by) the connector assembly 10. The pressure balance is of particular importance in embodiments in which the jug unit is devoid of an opening (such as a pour hole) further to the opening O to be closed by the connector assembly.

Indeed, if the jug unit 20 having such increased pressure in its interior is begun to be unscrewed from the connector assembly 10 (preferably after being turned about 180°, such that the opening O is directed upwardly, cf. Figure 1c), as long as the increased pressure exceeds the elastic force of the elastic element 14, the increased pressure may urge the tool holder 12 away from the edge of the jug unit 20. As a consequence, the sealing may be temporarily loosed, such that air (and possibly content) can escape and the pressure inside the jug unit is released. Thereby, the further unscrewing is made easier, and an eruptive escape of steam or other content is prevented. In particular, safety of a user is increased.

In Figure 2c, the connector assembly 10 is depicted (in a cross section and with an enlarged portion thereof) when being coupled to the motor base 30 without a jug unit. In this situation, as in the situations shown in Figures 1a, 1b, 2a, 2b, the tool holder 12 is in its first tool holder position, due to the elastic force of the elastic element 14. As the clutch unit 16 of the connector assembly 10 is connected to the tool holder 12, it is thereby held away from a position in which it can engage with the clutch element 32 of the motor base 30. Thus, in this situation, the tool 15 cannot be driven by the motor base 30, which increases safety, as it avoids injuries caused by an inadvertently rotating tool. For driving the tool 15, the tool holder 12 has to be forced against the elastic force of the elastic element 14 to its second tool holder position (not shown). According to the present invention, such forcing can be realised by fixing the jug unit to the connector assembly.

Disclosed is a connector assembly 10 for connecting a jug unit 20 with a motor base 30 of a kitchen machine 1. The connector assembly 10 comprises a housing 11, a movable tool holder 12, sealing means 13 and at least one elastic element 14. The tool holder 12 is configured to be moved, by the jug unit 20 when the jug unit is being fixed to the connector assembly 10 - and against an elastic force of the one or more elastic element/s 14 - from a first tool holder position to a second tool holder position, and to meanwhile press the sealing means 13 against the jug unit 20.

Further disclosed is a kitchen machine 1 comprising a connector assembly 10, a motor base 30 and a jug unit 20.

### Reference signs

- 1: kitchen machine

- 10: connector assembly
- 11: housing
- 11-a: connection means
- 11-b: further connection means
- 11-c: limit stop
- 12: tool holder
- 13: sealing means
- 14: elastic element
- 15: tool
- 16: clutch unit

- 20: jug unit
- 21: jug unit connection means

- 30: motor base
- 31: motor base connection means
- 32: clutch element

- O: opening of jug unit

## Claims

1. Connector assembly (10) for connecting a jug unit (20) with a motor base (30) of a kitchen machine (1), the connector assembly (10) comprising
- a housing (11) comprising connection means (11-a) for fixing the jug unit (20) to the connector assembly (10);
- a movable tool holder (12) holding or configured to hold at least one tool (15) for processing food, and providing a closure surface of the jug unit (20) when combined therewith;
- sealing means (13) configured to seal a connection of the tool holder (12) with the jug unit (20) when the jug unit is fixed to the connector assembly; and
- one or more elastic element/s (14);
wherein the tool holder (12) is configured to be moved, by the jug unit (20) when the jug unit is being fixed to the connector assembly (10) and against an elastic force of the one or more elastic element/s (14), from a first tool holder position of the tool holder (12) to a second tool holder position thereof, and to meanwhile press the sealing means (13) against the jug unit (20).

2. Connector assembly according to claim 1, further comprising a clutch unit (16) connected to the tool holder (12),
wherein, if the tool holder (12) is in its first tool holder position, the clutch unit (16) is unable to engage with a clutch element (32) of the motor base (30),
and if the tool holder (12) is in its second tool holder position, the clutch unit (16) is able to engage with the clutch element (32) so as to drive the tool (15).

3. Connector assembly according to claim 1 or 2, wherein for transferring the tool holder (12) from its first tool holder position to its second tool holder position applying a force of at least 15N, at least 17N or at least 19N is necessary and/or a force of at most 23N or at most 21N.

4. Connector assembly according to one of the preceding claims, wherein the connection means (11-a) of the housing (11) comprises at least one screw thread.

5. Connector assembly according to one of the preceding claims, wherein the one or more elastic element/s (14) comprise/s at least one spring.

6. Connector assembly according to one of the preceding claims, wherein the at least one tool (15) comprises at least one rotatable knife assembly.

7. Kitchen machine (1) comprising a jug unit (20), a motor base (30) and a connector assembly (10) according to one of the preceding claims and configured to connect the jug unit (20) with the motor base (30).

8. Kitchen machine (1) according to claim 8, wherein the kitchen machine comprises an electric blender.
